(19)

Europäisches Patentamt

European Patent Office

Office européen des brevets

(11) **EP 4 446 949 A1**

(12) **EUROPEAN PATENT APPLICATION**
published in accordance with Art. 153(4) EPC

(43) Date of publication:
**16.10.2024 Bulletin 2024/42**

(21) Application number: **22907187.3**

(22) Date of filing: **29.11.2022**

(51) International Patent Classification (IPC):
*G06N 10/00* (2022.01)  *G06T 7/20* (2017.01)

(52) Cooperative Patent Classification (CPC):
**G06N 10/00; G06T 7/20**

(86) International application number:
**PCT/JP2022/043892**

(87) International publication number:
**WO 2023/112658 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.12.2021 JP 2021201521**

(71) Applicant: **NEC Solution Innovators, Ltd.
Koto-ku, Tokyo 136-8627 (JP)**

(72) Inventor: **IHARA Yasuyuki
Tokyo 136-8627 (JP)**

(74) Representative: **Vossius & Partner
Patentanwälte Rechtsanwälte mbB
Siebertstraße 3
81675 München (DE)**

(54) **OBJECT COLLATION SYSTEM, OBJECT COLLATION METHOD, AND OBJECT COLLATION PROGRAM**

(57)     The input means 81 accepts input of multiple images captured of a target object that is the type of object to be collated. The object detection means 82 detects the target object from the images. The execution instruction means 83 transmits to a quantum computer performing the minimum-maximal matching, information of the first node representing a location of the detected target object, information of the second node representing a location of the target object predicted based on a past collation result, and a degree of similarity between the location of the first node and the location of the second node, and causes the quantum computer to execute collation process between the past collation result and the target object detected in the images, and determines the first node corresponding to the second node.

FIG. 10

## Description

### Technical Field

This invention relates to an object collation system, an object collation method, and an object collation program for collating objects present in multiple images.

### Background Art

It is common practice to track many objects, such as vehicles or people, from images captured by a single camera, or to track objects from images captured by multiple cameras. Various methods have been proposed to solve such object collation using maximum matching or 0-1 integer programming problems.

For example, Non-Patent Literature 1 describes a method for tracking multiple objects. Specifically, Non-Patent Literature 1 describes a framework for Kalman filtering and frame-by-frame data association in image space using the Hungarian method with an association metric that measures bounding box overlap (SORT: Simple online and real-time tracking) is described.

Non-Patent Literature 2 describes a method for calculating the Wasserstein distance of a persistent diagram with a quantum computer.

### Citation List

### Non patent Literature

NPL 1: Nicolai Wojke, Alex Bewley, Dietrich Paulus, "Simple online and realtime tracking with a deep association metric", 2017 IEEE International Conference on Image Processing (ICIP), 17-20 Sept. 2017.

NPL 2: Jesse J. Berwald, Joel M. Gottlie, and Elizabeth Munch, "Computing Wasserstein Distance for Persistence Diagrams on a Quantum Computer," Computer Science, Physics, 17 September 2018.

### Summary of Invention

### Technical Problem

On the other hand, it is also known that the computational time for matching objects increases as the number of objects to be detected increases, since the computational cost is polynomial time. For example, it is known that the computational cost is $O(n^3)$ when solving the maximum matching of an n x n bipartite graph using the Hungarian method described in Non-Patent Literature 1. In addition, in general, there is a trade-off between computational speed and accuracy.

It is also possible to perform online and real-time tracking by SORT as described in Non-Patent Literature 1. However, the so-called Tracking by Detection (a method of tracking based on the results of object detection), as described in Non-Patent Literature 1, has the problem that if the accuracy of detection decreases, the accuracy of tracking also decreases.

Here, one idea is to use a quantum computer to control the increase in computation time. However, for example, the solution obtained by quantum annealing is unstable, and the optimal solution is not always obtained. Therefore, it is difficult to say that simply applying a quantum computer can improve accuracy. Therefore, it is desirable to be able to perform object collation in a way that improves calculation speed while also maintaining accuracy.

Therefore, it is an exemplary object of the present invention to provide an object collation system, an object collation method, and an object collation program that can perform object collation in a way that improves calculation speed while also maintaining accuracy.

### Solution to Problem

The object collation system according to the present invention includes an input means which accepts input of multiple images captured of a target object that is the type of object to be collated, an object detection means which detects the target object from the images, and an execution instruction means which transmits to a quantum computer performing the minimum-maximal matching, information of the first node representing a location of the detected target object, information of the second node representing a location of the target object predicted based on a past collation result, and a degree of similarity between the location of the first node and the location of the second node, causes the quantum computer to execute collation process between the past collation result and the target object detected in the images, and determines the first node corresponding to the second node.

The object collation method according to the present invention includes: accepting input of multiple images captured of a target object that is the type of object to be collated; detecting the target object from the images; and transmitting to a quantum computer performing the minimum-maximal matching, information of the first node representing a location of the detected target object, information of the second node representing a location of the target object predicted based on a past collation result, and a degree of similarity between the location of the first node and the location of the second node, and causing the quantum computer to execute collation process between the past collation result and the target object detected in the images; and determining the first node corresponding to the second node.

The object collation program according to the present invention for causing a computer to execute: input process for accepting input of multiple images captured of a target object that is the type of object to be collated; object detection process for detecting the target object from the images; and execution instruction process for transmitting to a quantum computer performing the minimum-maximal matching, information of the first node representing a location of the detected target object, information of the second node representing a location of the target object predicted based on a past collation result, and a degree of similarity between the location of the first node and the location of the second node, causing the quantum computer to execute collation process between the past collation result and the target object detected in the images, and determining the first node corresponding to the second node.

**Advantageous Effects of Invention**

According to the present invention, object collation can be performed in a way that improves calculation speed while also maintaining accuracy.

**Brief Description of Drawings**

[FIG. 1] It depicts a block diagram showing a configuration example of a first example embodiment of the object collation system according to the present invention.
[FIG. 2] It depicts an explanatory diagram showing an example of a situation in which the object collation system of the first example embodiment is used.
[FIG. 3] It depicts an explanatory diagram showing an example of a bipartite graph.
[FIG. 4] It depicts an explanatory diagram showing an example of the process of generating multiple patterns of information of the second node.
[FIG. 5] It depicts an explanatory diagram showing an example of visualization of traffic flow conditions.
[FIG. 6] It depicts a flowchart showing an example of the operation of the object collation system of the first example embodiment.
[FIG. 7] It depicts a block diagram showing a configuration example of a second example embodiment of the object collation system according to the present invention.
[FIG. 8] It depicts an explanatory diagram showing an example of a situation in which the object collation system of the second example embodiment is used.
[FIG. 9] It depicts an explanatory diagram showing evaluation results.
[FIG. 10] It depicts a block diagram showing an overview of the object collation system according to the present invention.

**Description of Embodiments**

The following is a description of example embodiments of the invention with reference to the drawings.

Example embodiment 1

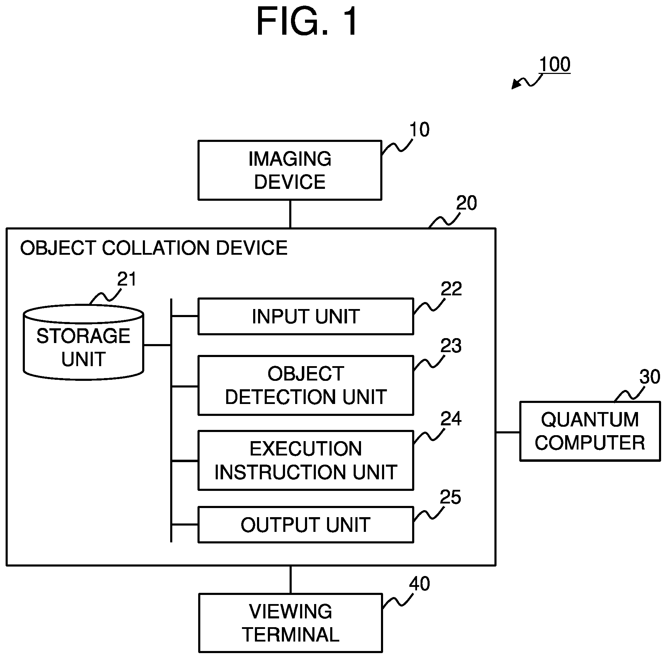

FIG. 1 is a block diagram showing a configuration example of a first example embodiment of the object collation system according to the present invention. The object collation system 100 of this example embodiment includes an imaging device 10, an object collation device 20, a quantum computer 30, and a viewing terminal 40. The object collation device 20 is connected to the imaging device 10, the quantum computer 30, and the viewing terminal 40, respectively.
The quantum computer 30 is a computer that uses the phenomena of quantum mechanics to achieve parallel computation. For example, a quantum computer with a quantum annealing method (hereinafter referred to as a quantum annealing machine) is a device dedicated to obtaining the ground state of the Hamiltonian of the Ising model, and is a device that performs annealing based on the Ising model. More specifically, a quantum annealing machine is a device that probabilistically finds the value of a binary variable that minimizes or maximizes the objective function (i.e., Hamiltonian) of the Ising model with a binary variable as an argument. The binary variable may be realized in classical bit or quantum bit.

The form of the quantum computer 30 is arbitrary. The quantum computer 30 may be composed of any hardware that probabilistically finds the value of a binary variable that minimizes or maximizes an objective function that takes a binary variable as an argument. The quantum computer 30 may be, for example, a non-Neumannian computer in which the objective function is implemented by hardware in the form of an Ising model. The quantum computer 30 may be a quantum annealing machine or a general annealing machine.

The imaging device 10 is installed at a predetermined location and captures images of objects of the type to be collated (hereinafter referred to as "target object"). The imaging device 10 transmits the captured images to the object collation device 20. The imaging device 10 may, for example, transmit each frame unit image captured as a video image to the object collation device 20.

In this example embodiment, a case will be described in which a single imaging device 10 is installed. The imaging device 10 may, for example, be connected to a switching hub with PoE (Power over Ethernet) functionality and supplied with power from a LAN (Local Area Network) cable.

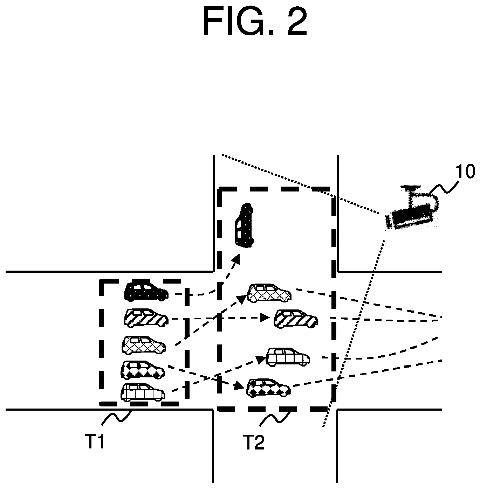

In this example embodiment, a vehicle is mainly used as an example of a target object. FIG. 2 is an explanatory diagram showing an example of a situation in which the object collation system 100 of this example embodiment is used. FIG. 2 shows a situation in which the imaging device 10 is installed on a road where multiple vehicles are passing, and multiple vehicles, which are the target objects, are being imaged. The object collation system 100 collates the vehicles in the image T1 captured at time t with the vehicles in the image T2 captured at time t+1 to determine whether they are the same vehicle or not.

However, the target object is not limited to a vehicle as long as it is a moving object, and may be a human being, for example. The target object may also be an object that is invisible to the human eye, such as a particle, as long as the object can be captured as an image. If the object is a particle, for example, in radiotherapy or experiments using accelerators, it will be possible to estimate the trajectory of the particle.

The object collation device 20 of this example embodiment is a device that determines and collates the same target object between frames at different times in a video captured by a single imaging device 10. The object collation device 20 includes a storage unit 21, an input unit 22, an object detection unit 23, an execution instruction unit 24, and an output unit 25.

The storage unit 21 stores various information used by the object collation device 20 for processing. The storage unit 21 may, for example, store input images. The storage unit 21 is realized by, for example, a magnetic disk.

The input unit 22 accepts input of multiple images of a target object from the imaging device 10. The input unit 22 may store the accepted images in the storage unit 21.

The object detection unit 23 detects the target object from an image. The method by which the object detection unit 23 detects the target object from an image is arbitrary, and any known method, such as YOLOv5, can be used. For example, the object detection unit 23 may output the coordinates of the upper left vertex and the lower right vertex of a rectangle enclosing the detected object (i.e., a bounding box) in the image as detection results.

The execution instruction unit 24 instructs the quantum computer 30 to execute the collation process for the target object. Here, one of the matching problems is the minimum-maximal matching problem. The minimum-maximal matching can be formulated as an optimization problem that can be solved by quantum annealing, since it can be expressed by the Ising model. Therefore, the quantum computer 30 in this example embodiment shall operate as a quantum computer that performs minimum-maximal matching.

The following is an example of how the Ising model can be used to represent the minimum-maximal matching problem. Here, it is assumed that maximal matching of the minimum variable is performed when an undirected graph G = (V, E) is given. For each edge $e \in E$, let $x_e$ be a binary variable that represents whether the edge is included in the matching C or not. Also, for each vertex v, let $\partial v$ be the set of edges with v as an endpoint. Then, for each vertex, it is defined the variable $y_v$ expressed in Equation 1 below.

[Math. 1]

$$y_v = \sum_{e \in \partial v} x_e$$

(Equation 1)

If the set of edges D such that $X_e$ is a graph matching, then $y_v$ is a variable that takes 1 if vertex v is an endpoint of an edge in the matching and 0 otherwise. It is assumed that A, B, and C are positive constants, and A/ ∆ -2>B>C. Note that ∆ is the maximum order of the graph. In this case, an energy function H is expressed by Equation 2 below.

[Math. 2]

$$H = H_A + H_B + H_C \quad (\text{Equation } 2)$$

wherein

$$H_A = A \sum_{v \in V} \sum_{e1,e2 \in \partial v} x_{e1} x_{e2}$$

$$H_B = B \sum_{e=uv \in E} (1 - y_u)(1 - y_v)$$

$$H_C = C \sum_{e \in E} x_e.$$

The method of expressing the energy function is an example, and the minimum-maximal matching problem may be formulated in other ways as described in Non-Patent Literature 2.

The execution instruction unit 24 transmits the information necessary to solve the bipartite graph problem (in this case, the minimum-maximal matching problem) to the quantum computer to execute the collation process.

The collation process here can be said to be the process of determining a plausible first node corresponding to the second node. As a result of the collation process by the quantum computer, for example, a candidate first node corresponding to the second node is identified.

First, the execution instruction unit 24 generates information for the nodes on both sides of the bipartite graph. Specifically, the execution instruction unit 24 generates information representing the location of the target object at time t detected from the image as information for one node (hereinafter referred to as the first node). The execution instruction unit 24 also generates information representing the location of the object at time t, which is predicted based on past collation results, as information for the other node (hereinafter referred to as the second node). Hereinafter, the object itself may also be referred to as a node.

The past collation results mean the results of object identification by the collation process performed prior to the current point in time. Identification here does not require identification of the individual objects themselves, but refers to the process of associating objects that are assumed to match among multiple images.

Multiple first and second nodes are generated for each target object, respectively. The information of the first node and the second node need not include specific location information (e.g., coordinate information) detected by the object detection unit 23, but only abstract information such as an index for identification for each target object.

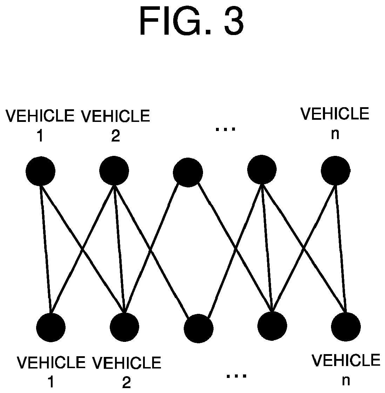

FIG. 3 is an explanatory diagram showing an example of a bipartite graph. The upper black circle in the bipartite graph shown in FIG. 3 indicates the node (i.e., the first node) that represents the location of the detected target object in the frame at time t. The lower black circle indicates the node (i.e., the second node) that represents the predicted location of the vehicle in the frame at time t based on the vehicle detection and tracking results (i.e., the collation results) up to the frame at time t-1.

The edges connecting the upper and lower nodes are associated with a degree of similarity between the nodes as weights. The degree of similarity between nodes includes a degree of similarity between images of detected target objects and IoU (Intersection over Union), which indicates the overlap between bounding boxes.

The method by which the execution instruction unit 24 predicts the location of the target object at time t based on past collation results is arbitrary. For example, the execution instruction unit 24 may predict the location of the target object at time t by linear regression using coordinates of the location where the same target object (specifically, the same indexed target object) was detected in the images of frames that go back in time from the previous time t-1 as the training data. In this case, time corresponds to the explanatory variable, and coordinates correspond to the objective variable.

The execution instruction unit 24 of this example embodiment generates multiple patterns of information of the second node according to the length of the past collation results used for prediction. The length of the collation results is arbitrary and may be predetermined by the administrator or others. Specifically, the execution instruction unit 24 generates multiple patterns of second node information, including information of the second node based on the most recent tracking results (e.g., from time t-1 to time t-10), information of the second node based on midterm tracking results (e.g., from time t-1 to time t-20), and information of the second node based on long-term tracking results (e.g., from time t-1 to t-20). The execution instruction unit 24 then transmits the information of the second node of these multiple patterns to the quantum computer 30 in a batch to execute the collation process.

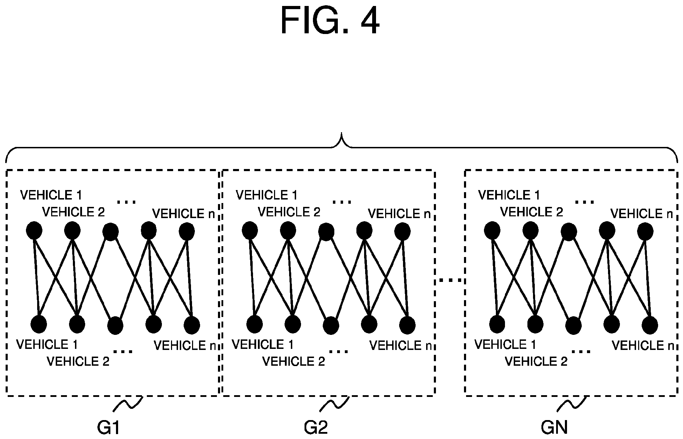

FIG. 4 is an explanatory diagram showing an example of the process of generating multiple patterns of information of the second node. The information of the second node shown in FIG. 4 indicates that multiple patterns of bipartite graphs G1-GN are generated for different time periods.

Similar to the bipartite graph shown in FIG. 3, the upper black circle in the bipartite graph G1 indicates a node representing the location of the detected target object in the frame at time t. The lower black circle indicates a node representing the predicted location of the vehicle in the frame at time t, based on the collation results of frames from time t-1 to t-10.

For example, the upper black circle in the bipartite graph G2 indicates a node representing the location of the target object detected in the frame at time t. The lower black circle indicates a node representing the predicted location of the vehicle in the frame at time t, based on the collation results of frames from time t-1 to t-20.

The execution instruction unit 24 collectively transmits the information of the second nodes of the multiple patterns to the quantum computer 30 and causes the quantum computer 30 to execute collation process for each information of the second node. As a result, multiple collation results are obtained from the information of the second node in each pattern.

The execution instruction unit 24 then determines the first node corresponding (i.e., matching) to the second node using the multiple collation results. Specifically, the execution instruction unit 24 may determine associating nodes that more closely match each other in the collation results. For example, the execution instruction unit 24 may determine the first node corresponding to the second node by majority voting of the candidates for the first node corresponding to the second node based on the results of the collation process. At this time, the execution instruction unit 24 may assign the index assigned to the second node as the index of the first node that is determined to be a match.

For example, if the collation process (i.e., multiplexing of matching) were to be performed on a device such as a so-called classical computer by combining the information of the second node of multiple patterns, it would be impractical to perform the collation process on the information of multiple second nodes at once because the amount of calculation would be enormous. On the other hand, in this example embodiment, the collation process is performed by the quantum computer 30. Therefore, the increase in computational cost can be suppressed.

It is possible to stabilize the solution obtained by re-solving multiple times for one type of information of the second node. However, if, for example, the target object is a vehicle, it is difficult to improve the accuracy even after re-solving multiple times if the only image is one in which the vehicle is hidden behind another vehicle or an obstacle (undetected).

On the other hand, in this example embodiment, multiple patterns of information of the second node are generated according to the length of collation result used for prediction. Thus, for example, even if the solution of quantum annealing is unstable, majority voting makes it possible to mitigate the effect. Furthermore, even in a situation where accurate location prediction becomes difficult because, for example, the target object cannot be detected in the middle of the process, the effect can be mitigated in the same way.

The output unit 25 outputs the results of the collation process. In this example embodiment, the output unit 25 transmits the results of the collation process to the viewing terminal 40 for display. The output unit 25 may output the results of the collation process to other devices (not shown), etc.

Specifically, the output unit 25 may transmit the location information of the detected target object to the viewing terminal 40 in correspondence with the information identifying the target object (e.g., an index). The location information may be, for example, information converted to coordinates on the planar map shown in FIG. 2. The output unit 25 may output not only the location information and the index, but also information indicating the attributes of the target object obtained as a result of image recognition (e.g., the type of vehicle, such as large car, small car, motorcycle, etc.).

The input unit 22, the object detection unit 23, the execution instruction unit 24, and the output unit 25 are realized by a computer processor (e.g., CPU (Central Processing Unit), GPU (Graphics Processing Unit (GPU)) that operates according to a program (object collation program).

For example, the program may be stored in the storage unit 21 of the object collation device 20, and the processor may read the program and operate as the input unit 22, the object detection unit 23, the execution instruction unit 24, and output unit 25 according to the program. The functions of the object collation device 20 may be provided in a SaaS (Software as a Service) format.

The input unit 22, the object detection unit 23, the execution instruction unit 24, and the output unit 25 may each be realized by dedicated hardware. Also, some or all of the components of each device may be realized by general-purpose or dedicated circuits (circuitry), processors, etc., or a combination thereof. They may be configured by a single chip or by multiple chips connected via a bus. Part or all of each component of each device may be realized by a combination of the above-mentioned circuits, etc. and a program.

When some or all of the components of the object collation device 20 are realized by multiple information processing devices, circuits, etc., the multiple information processing devices, circuits, etc. may be centrally located or distributed. For example, the information processing devices and circuits may be realized as a client-server system, a cloud computing system, or the like, each of which is connected via a communication network.

The viewing terminal 40 visualizes the collation results based on the information transmitted from the object collation device 20 (more specifically, the output unit 25). More specifically, the viewing terminal 40 visualizes the movement status of the target object. For example, if the target object is a vehicle, the viewing terminal 40 may visualize the traffic flow conditions.

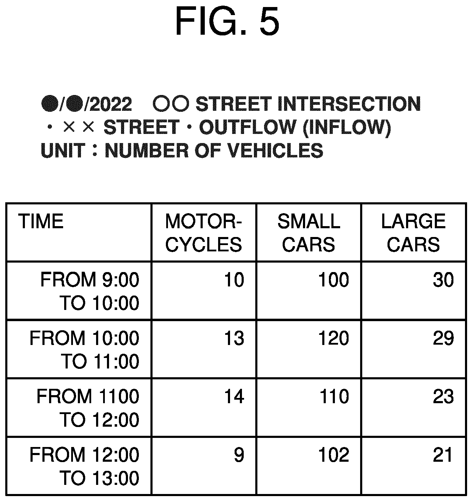

FIG. 5 is an explanatory diagram showing an example of visualization of traffic flow conditions. In the example shown in FIG. 5, a line is set at an appropriate location (e.g., near a pedestrian crossing) on a planar map of the intersection as shown in FIG. 2, and the number of vehicles crossing the set line at a pre-specified time (e.g., from 12:00 to 13:00) is shown in a table format. More specifically, a count of the number of vehicles that crossed the line into the intersection and a count of the number of vehicles that crossed the line out of the intersection.

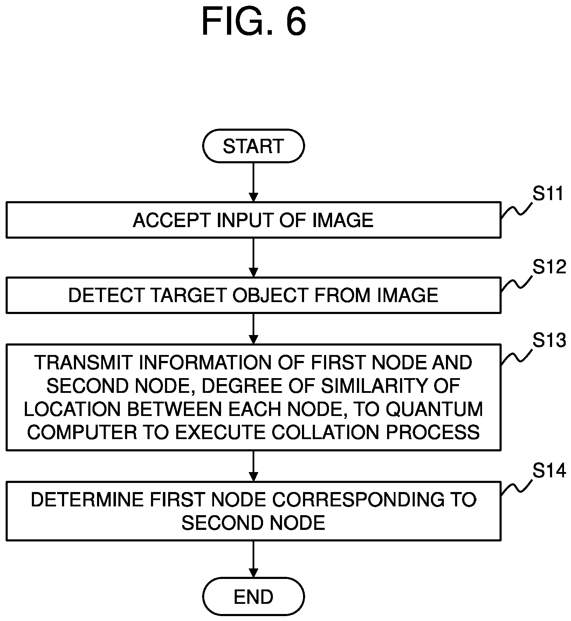

Next, the operation of this example embodiment of the object collation system 100 will be described. FIG. 6 is a flowchart showing an example of the operation of the object collation system 100 of this example embodiment. The input unit 22 accepts input of an image captured by the imaging device 10 (step S11). The object detection unit 23 detects a target object from the image (step S12). The execution instruction unit 24 transmits the information of the first node and the second node, as well as the degree of similarity of the locations between each node, to the quantum computer 30 to execute the collation process (step S13), and determines the first node corresponding to the second node (step S14).

As described above, in this example embodiment, the input unit 22 accepts input of multiple images captured of a target object, and the object detection unit 23 detects the target object from the images. Then, the execution instruction unit 24 transmits the information of the first node and the second node, as well as the degree of similarity between the location of the first node and the location of the second node, to the quantum computer performing the minimum-maximal matching to execute the collation process and determine the first node corresponding to the second node. Thus, object collation can be performed in a way that improves calculation speed while also maintaining accuracy.

Next, a variant of the object collation system 100 of this example embodiment will be described. In the above example embodiment, the collation process focused on the entire target object. On the other hand, if the object can be divided into individual parts (hereinafter referred to as "parts"), the collation process may be performed on the divided parts.

In other words, the object detection unit 23 may detect individual parts of the target object (i.e., parts) from the image in which the target object was captured. A known method may be used for this detection process. The execution instruction unit 24 may then transmit the information of the first node representing the detected location of the parts and the information of the second node representing the predicted location of the parts based on past collation results, as well as the degree of similarity of each part, to the quantum computer 30 to execute the collation process.

For example, if the target object is a human, parts such as the head, abdomen, arms, and legs that make up the human body are assumed. In this case, the object detection unit 23 may detect each part included in the human from the image taken of the human and, as in the above example embodiment, transmit the location and degree of similarity of the parts predicted based on past collation results to the quantum computer 30 to execute the collation process. This makes it possible to track the movement of the human body.

For example, if the target object is an organ, cell-level parts that constitute the organ are assumed. In this case, the object detection unit 23 may detect cell-level parts from a biological image, such as an organ image, and, as in the above example embodiment, transmit the location and degree of similarity of the cells predicted based on past collation results to the quantum computer 30 to execute the collation process. This makes it possible to analyze life phenomena such as cell division.

Example embodiment 2.

Next, a second example embodiment of the object collation system will be described. In the first example embodiment, the case in which a single imaging device 10 is installed and the images captured by that imaging device 10 are used is described. In the second example embodiment, a configuration in which multiple imaging device 10 are installed to capture images of a target object is described. The areas that are captured by the imaging device 10 may or may not overlap.

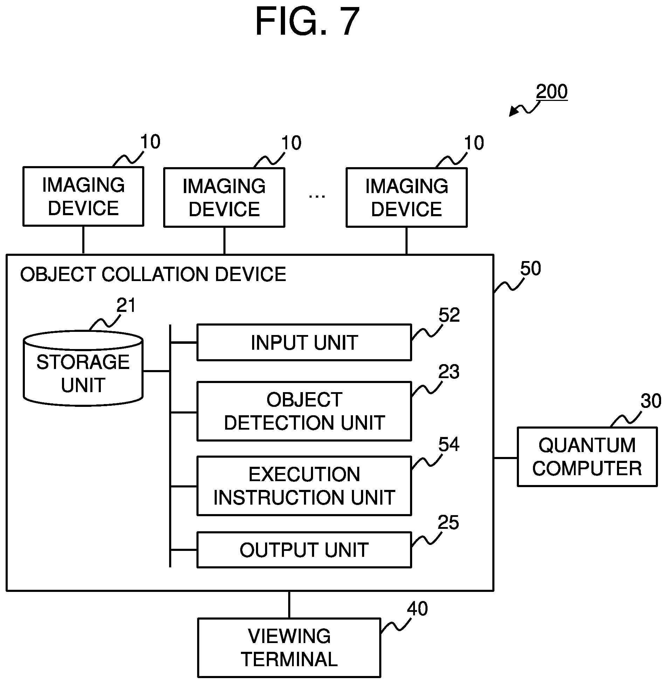

FIG. 7 is a block diagram showing a configuration example of a second example embodiment of the object collation system according to the present invention. The object collation system 200 of this example embodiment includes multiple imaging device 10, an object collation device 50, a quantum computer 30, and a viewing terminal 40. The object collation device 50 is connected to each of the imaging device 10, the quantum computer 30, and the viewing terminal 40, respectively. Since the contents of the imaging device 10, the quantum computer 30, and the viewing terminal 40 are the same as those of the first example embodiment, the following description is omitted.

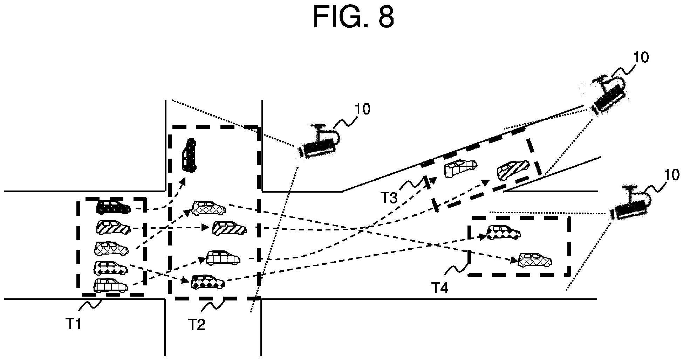

FIG. 8 is an explanatory diagram showing an example of a situation in which the object collation system 200 of the second example embodiment is used. FIG. 8 shows a situation in which multiple imaging device 10 are installed on a road where multiple vehicles are passing, and multiple vehicles, which are the target objects, are being imaged. The vehicles in each image T1, T2, T3, T4 captured at each time are collated to determine whether they are the same vehicle or not.

The object collation device 50 is a device that determines and collates the same target object between different video frames captured by multiple imaging device 10. The object collation device 50 includes a storage unit 21, an input unit 52, an object detection unit 23, an execution instruction unit 54, and an output unit 25. The contents of the storage unit 21, the object detection unit 23, and the output unit 25 are the same as in the first example embodiment.

The input unit 52 accepts input of multiple images of a target object captured by multiple imaging device 10. As in the first example embodiment, the object detection unit 23 detects the target object from each of the accepted images. In this example embodiment, the object detection unit 23 detects the target object from the multiple images of the target object captured by multiple imaging device 10.

As in the first example embodiment, the execution instruction unit 54 transmits information of the first node, information of the second node, and a degree of similarity to the quantum computer 30, and causes the quantum computer 30 to execute collation process. The method by which the execution instruction unit 54 generates the information of the first node, the information of the second node, and the degree of similarity is the same as in the first example embodiment. Furthermore, the execution instruction unit 54 of this example embodiment may, for example, generate the information of the second node by predicting the location of the target object according to the distance of the range to be imaged by the imaging device 10. The execution instruction unit 54 may also determine the degree of similarity by considering the accuracy according to the distance of the range to be captured.

Thereafter, the process of collectively transmitting the multiple patterns of second node information to the quantum computer 30 and executing the collation process for each second node information is the same as in the first example embodiment.

As described above, in this example embodiment, the input unit 52 accepts input of multiple images of a target object captured by multiple imaging device 10, and the object detection unit 23 detects the target object from multiple images. Thus, in addition to the effects of the first example embodiment, it is possible to collate target objects between remote locations. In addition, since images captured by multiple imaging device 10 can be used, blind spot countermeasures for the occlusion camera become possible.

**Example**

The invention will be explained by specific examples below, but the scope of the invention is not limited to what is described below. The following is a comparison of the general tracking process and the tracking process using the object collation system according to the present invention, using the case of a single camera as an example. In the evaluation of this example, YOLOv5 is commonly used for vehicle detection in both tracking processes.

Two types of tracking processes are exemplified as common tracking processes. The first tracking process is the tracking process (DeepSort) described in Non-Patent Literature 1. The second tracking process is the tracking process using maximum weight maximum matching (maximum number of edges in matching), where the matching is done by IoU between the location prediction result and detection result. In this example, Linear Sum Assignment, which comes with the SciPy package, is used. On the other hand, the tracking process used in this present invention is a tracking process using minimum weight maximal matching (the number of edges cannot be increased any further in matching).

In this example, the tracking process is evaluated using MOTA (Multi Object Tracking Accuracy) and vehicle count ratio. MOTA evaluates the frequency of non-detections, false positives, and track ID swaps, and is calculated by Equation 3, shown below.

[Math. 3]

$$MOTA = 1 - \frac{\sum_t (FP_t + Miss_t + IDSW_t)}{\sum_t g_t}$$

(Equation 3)

In Equation 3, t is the frame number and gt is the number of correct data in the t-th frame. FPt, Misst, and IDSWt are the frequency of non-detections, false positives, and track ID swaps in the t-th frame, respectively.

The vehicle count ratio is calculated as "number of vehicles tracked/number of vehicles correct," with a value closer to 1.0 indicating a higher evaluation. In this case, the evaluation is based on the number of vehicles passing through the intersection. The tracking process using the object collation system of the present invention is substituted with a package that can be computed on a common PC (Personal Computer). Furthermore, in this example, evaluation is performed using three types of images.

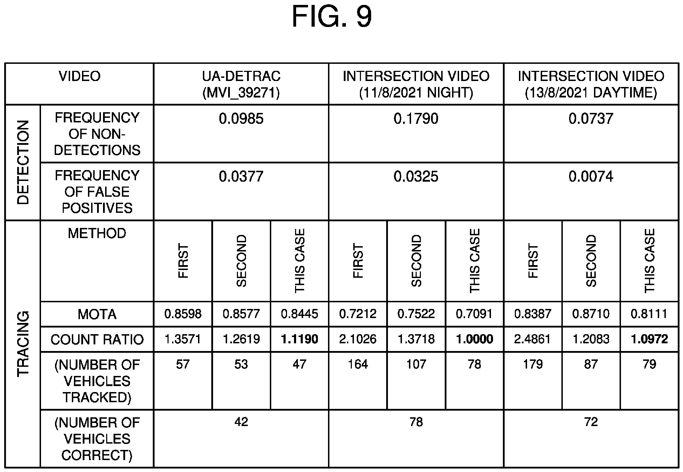

FIG. 9 is an explanatory diagram showing evaluation results. The "first" in the method in FIG. 9 indicates the first tracking process described above, the "second" indicates the second tracking process described above, and the "this case" indicates the tracking process using the object collation system according to the present invention. As shown in FIG. 9, it is confirmed that accuracy can be maintained in the tracking process using the object collation system according to the present invention, especially in terms of the count ratio.

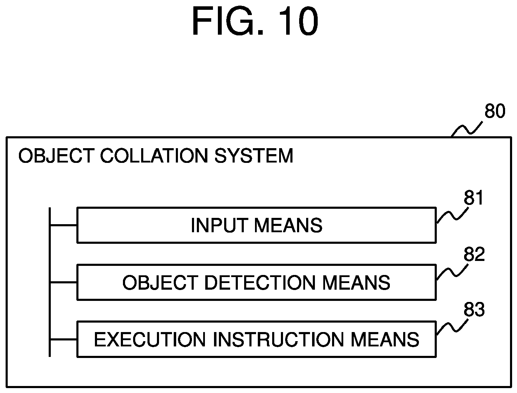

The following is an overview of the invention. FIG. 10 is a block diagram showing an overview of the object collation system according to the present invention. The object collation system 80 according to the present invention includes an input means 81 (e.g., input unit 22) which accepts input of multiple images captured of a target object that is the type of object to be collated (e.g., vehicle, human, particle, etc.), an object detection means 82 (e.g., object detection unit 23) which detects the target object from the images, and an execution instruction means 83 (e.g., execution instruction unit 24) which transmits to a quantum computer (e.g., quantum computer 30) performing the minimum-maximal matching, information of the first node representing a location of the detected target object (e.g., at time t), information of the second node representing a location of the target object predicted based on a past collation result (e.g., at time t), and a degree of similarity (e.g., IoU) between the location of the first node and the location of the second node, causes the quantum computer to execute collation process between the past collation result and the target object detected in the images, and determines the first node corresponding to the second node.

Such a configuration allows object collation to be performed in a way that improves calculation speed while also maintaining accuracy.

The execution instruction means 83 may generate multiple patterns of information of the second node according to length of the past collation result used for prediction, cause the quantum computer to execute the collation process for each of the patterns, and determine that nodes with more collation results for each pattern are to be collated with each other.

In that case, the execution instruction means 83 may collectively transmit the generated information of multiple second nodes to cause the quantum computer to execute the collation process in a batch.

Furthermore, the execution instruction means 83 may determine the first node corresponding to the second node by majority voting of candidates for the first node corresponding to the second node from results of the collation process.

The object detection means 82 may detect parts (e.g., heads, cells, etc.), which are individual parts of the target object, from the image, and the execution instruction means 83 may transmit information of the first node representing a detected location of the parts, information of the second node representing a predicted location of the part based on past collation results, and a degree of similarity of the location of each part to the quantum computer to execute the collation process.

The input means 81 may accept input of multiple images of the target object captured by multiple imaging devices (e.g., imaging device 10), and the object detection means 82 may detect the target object from the multiple images.

The above description of the present invention is with reference to the embodiments and examples, but the present invention is not limited to the above embodiments and examples. Various changes can be made in the composition and details of the present invention that can be understood by those skilled in the art within the scope of the present invention.

This application claims priority based on Japanese patent application 2021-201521, filed on December 13, 2021, the entire disclosure of which is hereby incorporated.

**Industrial applicability**

The present invention is suitably applied to an object collation system for collating objects present in multiple images. Further, the present invention is suitably applied to a system that utilizes a quantum computer to grasp real-time traffic volume and performs traffic control accordingly.

**Reference Signs List**

10 Imaging device
20, 50 Object collation device

21 Storage unit
22, 52 Input unit
23 Object detection unit
24, 54 Execution instruction unit
25 Output unit
30 Quantum Computer
40 Viewing terminal

**Claims**

1. An object collation system comprising:

   an input means which accepts input of multiple images captured of a target object that is the type of object to be collated;
   an object detection means which detects the target object from the images; and
   an execution instruction means which transmits to a quantum computer performing the minimum-maximal matching, information of the first node representing a location of the detected target object, information of the second node representing a location of the target object predicted based on a past collation result, and a degree of similarity between the location of the first node and the location of the second node, causes the quantum computer to execute collation process between the past collation result and the target object detected in the images, and determines the first node corresponding to the second node.

2. The object collation system according to claim 1, wherein
   the execution instruction means generates multiple patterns of information of the second node according to length of the past collation result used for prediction, causes the quantum computer to execute the collation process for each of the patterns, and determines that nodes with more collation results for each pattern are to be collated with each other.

3. The object collation system according to claim 2, wherein
   the execution instruction means collectively transmits the generated information of multiple second nodes to cause the quantum computer to execute the collation process in a batch.

4. The object collation system according to claim 2 or 3, wherein
   the execution instruction means determines the first node corresponding to the second node by majority voting of candidates for the first node corresponding to the second node from results of the collation process.

5. The object collation system according to any one of claims 1 to 4, wherein

   the object detection means detects parts, which are individual parts of the target object, from the image, and
   the execution instruction means transmits information of the first node representing a detected location of the parts, information of the second node representing a predicted location of the part based on past collation results, and a degree of similarity of the location of each part to the quantum computer to execute the collation process.

6. The object collation system according to any one of claims 1 to 5, wherein

   the input means accepts input of multiple images of the target object captured by multiple imaging devices, and
   the object detection means detects the target object from the multiple images.

7. An object collation method comprising:

   accepting input of multiple images captured of a target object that is the type of object to be collated;
   detecting the target object from the images; and
   transmitting to a quantum computer performing the minimum-maximal matching, information of the first node representing a location of the detected target object, information of the second node representing a location of the target object predicted based on a past collation result, and a degree of similarity between the location of the first node and the location of the second node, and causing the quantum computer to execute collation process between the past collation result and the target object detected in the images; and
determining the first node corresponding to the second node.

8. The object collation method according to claim 7, further comprising:

generating multiple patterns of information of the second node according to length of the past collation result used for prediction;
causing the quantum computer to execute the collation process for each of the patterns; and
determining that nodes with more collation results for each pattern are to be collated with each other.

9. A program storage medium for storing an object collation program for causing a computer to execute:

input process for accepting input of multiple images captured of a target object that is the type of object to be collated;
object detection process for detecting the target object from the images; and
execution instruction process for transmitting to a quantum computer performing the minimum-maximal matching, information of the first node representing a location of the detected target object, information of the second node representing a location of the target object predicted based on a past collation result, and a degree of similarity between the location of the first node and the location of the second node, causing the quantum computer to execute collation process between the past collation result and the target object detected in the images, and determining the first node corresponding to the second node.

10. A program storage medium according to claim 9, wherein the object collation program for causing a computer to:
in the execution instruction process, to generate multiple patterns of information of the second node according to length of the past collation result used for prediction, to cause the quantum computer to execute the collation process for each of the patterns, and to determine that nodes with more collation results for each pattern are to be collated with each other.

# FIG. 1

100

IMAGING
DEVICE
10

OBJECT COLLATION DEVICE
20

STORAGE
UNIT
21

INPUT UNIT
22

OBJECT
DETECTION UNIT
23

EXECUTION
INSTRUCTION UNIT
24

OUTPUT UNIT
25

QUANTUM
COMPUTER
30

VIEWING
TERMINAL
40

# FIG. 2

# FIG. 3

VEHICLE VEHICLE ... VEHICLE
1 2 n

VEHICLE VEHICLE ... VEHICLE
1 2 n

# FIG. 4

VEHICLE 1 ... VEHICLE 2 VEHICLE n

VEHICLE 1 ... VEHICLE n VEHICLE 2

G1

VEHICLE 1 ... VEHICLE 2 VEHICLE n

VEHICLE 1 ... VEHICLE n VEHICLE 2

G2

VEHICLE 1 ... VEHICLE 2 VEHICLE n

VEHICLE 1 ... VEHICLE n VEHICLE 2

GN

# FIG. 5

●/●/2022  ○○ STREET INTERSECTION
・××　STREET・OUTFLOW (INFLOW)
UNIT : NUMBER OF VEHICLES

| TIME | MOTOR-CYCLES | SMALL CARS | LARGE CARS |
|---|---|---|---|
| FROM 9:00 TO 10:00 | 10 | 100 | 30 |
| FROM 10:00 TO 11:00 | 13 | 120 | 29 |
| FROM 1100 TO 12:00 | 14 | 110 | 23 |
| FROM 12:00 TO 13:00 | 9 | 102 | 21 |

# FIG. 6

```
        ┌─────────────┐
        │    START    │
        └─────────────┘
               │
               ▼
┌─────────────────────────────────────────┐  S11
│         ACCEPT INPUT OF IMAGE            │
└─────────────────────────────────────────┘
               │
               ▼
┌─────────────────────────────────────────┐  S12
│       DETECT TARGET OBJECT FROM IMAGE    │
└─────────────────────────────────────────┘
               │
               ▼
┌─────────────────────────────────────────┐  S13
│  TRANSMIT INFORMATION OF FIRST NODE AND  │
│  SECOND NODE, DEGREE OF SIMILARITY OF    │
│  LOCATION BETWEEN EACH NODE, TO QUANTUM  │
│  COMPUTER TO EXECUTE COLLATION PROCESS   │
└─────────────────────────────────────────┘
               │
               ▼
┌─────────────────────────────────────────┐  S14
│  DETERMINE FIRST NODE CORRESPONDING TO   │
│             SECOND NODE                  │
└─────────────────────────────────────────┘
               │
               ▼
        ┌─────────────┐
        │     END     │
        └─────────────┘
```

# FIG. 7

200

10                    10                    10

IMAGING          IMAGING          IMAGING
DEVICE           DEVICE    ...     DEVICE

OBJECT COLLATION DEVICE                              50

21

STORAGE          | INPUT UNIT                    52
UNIT             |
                 | OBJECT                         23
                 | DETECTION UNIT
                 |
                 | EXECUTION                       54
                 | INSTRUCTION UNIT
                 |
                 | OUTPUT UNIT                     25

QUANTUM          30
COMPUTER

VIEWING          40
TERMINAL

FIG. 8

# FIG. 9

| VIDEO | | UA-DETRAC (MVI_39271) | | | INTERSECTION VIDEO (11/8/2021 NIGHT) | | | INTERSECTION VIDEO (13/8/2021 DAYTIME) | | |
|---|---|---|---|---|---|---|---|---|---|---|
| **DETECTION** | FREQUENCY OF NON-DETECTIONS | 0.0985 | | | 0.1790 | | | 0.0737 | | |
| | FREQUENCY OF FALSE POSITIVES | 0.0377 | | | 0.0325 | | | 0.0074 | | |
| **TRACING** | METHOD | FIRST | SECOND | THIS CASE | FIRST | SECOND | THIS CASE | FIRST | SECOND | THIS CASE |
| | MOTA | 0.8598 | 0.8577 | 0.8445 | 0.7212 | 0.7522 | 0.7091 | 0.8387 | 0.8710 | 0.8111 |
| | COUNT RATIO | 1.3571 | 1.2619 | **1.1190** | 2.1026 | 1.3718 | **1.0000** | 2.4861 | 1.2083 | **1.0972** |
| | (NUMBER OF VEHICLES TRACKED) | 57 | 53 | 47 | 164 | 107 | 78 | 179 | 87 | 79 |
| | (NUMBER OF VEHICLES CORRECT) | 42 | | | 78 | | | 72 | | |

# FIG. 10

OBJECT COLLATION SYSTEM — 80

- INPUT MEANS — 81
- OBJECT DETECTION MEANS — 82
- EXECUTION INSTRUCTION MEANS — 83

| INTERNATIONAL SEARCH REPORT | International application No. |
|---|---|
| | **PCT/JP2022/043892** |

**A.    CLASSIFICATION OF SUBJECT MATTER**

***G06N 10/00***(2022.01)i; ***G06T 7/20***(2017.01)i
FI:    G06N10/00; G06T7/20

According to International Patent Classification (IPC) or to both national classification and IPC

**B.    FIELDS SEARCHED**

Minimum documentation searched (classification system followed by classification symbols)

G06N10/00; G06T7/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-135540 A (TOYOTA CENTRAL R&D LABS., INC.) 13 September 2021 (2021-09-13)<br>    paragraphs [0015], [0016], [0026], [0031]-[0034], [0045], [0048]-[0051], fig. 1, 7 | 1-10 |
| Y | LUCAS, Andrew. Ising formulations of many NP problems. Front. Phys. review article. February 2014, vol. 2, article 5, Frontiers Media [online]. 12 February 2014, pp. 1-15, [retrieved on 08 February 2023], Internet: <URL:https://www.frontiersin.org/articles/10.3389/fphy.2014.00005/pdf>, DOI:10.3389/fphy.2014.00005<br>    particularly, 4.5. Minimal maximal matching | 1-10 |
| Y | JP 2018-78431 A (NIPPON HOSO KYOKAI) 17 May 2018 (2018-05-17)<br>    paragraph [0091], fig. 8 | 2-4, 8, 10 |
| Y | JP 2016-170603 A (SECOM CO., LTD.) 23 September 2016 (2016-09-23)<br>    paragraphs [0016], [0020], [0029] | 5 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/043892**

| Patent document cited in search report | | | Publication date (day/month/year) | Patent family member(s) | Publication date (day/month/year) |
|---|---|---|---|---|---|
| JP | 2021-135540 | A | 13 September 2021 | (Family: none) | |
| JP | 2018-78431 | A | 17 May 2018 | (Family: none) | |
| JP | 2016-170603 | A | 23 September 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021201521 A

**Non-patent literature cited in the description**

- **NICOLAI WOJKE ; ALEX BEWLEY ; DIETRICH PAULUS.** Simple online and realtime tracking with a deep association metric. *2017 IEEE International Conference on Image Processing (ICIP),* 17 September 2017

- **JESSE J. BERWALD ; JOEL M. GOTTLIE ; ELIZABETH MUNCH.** Computing Wasserstein Distance for Persistence Diagrams on a Quantum Computer. *Computer Science, Physics,* 17 September 2018